Europäisches Patentamt

(19) European Patent Office

Office européen des brevets

(11) Publication number: **0 094 809 B2**

# (12) NEW EUROPEAN PATENT SPECIFICATION

(45) Date of publication of the new patent specification : **31.07.91 Bulletin 91/31**

(51) Int. Cl.⁵ : **B23K 11/00, B21F 27/20**

(21) Application number : **83302725.3**

(22) Date of filing : **13.05.83**

(54) Apparatus for manufacturing panels.

(30) Priority : **14.05.82 ES 512217**
**18.04.83 ES 521573**

(43) Date of publication of application :
**23.11.83 Bulletin 83/47**

(45) Publication of the grant of the patent :
**07.01.88 Bulletin 88/01**

(45) Mention of the opposition decision :
**31.07.91 Bulletin 91/31**

(84) Designated Contracting States :
**AT BE CH DE FR GB IT LI LU NL SE**

(56) References cited :
**EP-A- 0 069 108**
**AT-C- 214 241**
**AT-C- 311 155**
**DE-B- 2 330 019**
**DE-C- 1 484 217**
**DE-C- 2 314 002**

(56) References cited :
**FR-A- 1 420 087**
**FR-A- 1 431 587**
**FR-A- 2 129 931**
**FR-A- 2 177 030**
**FR-A- 2 336 994**
**LU-A- 66 275**
**US-A- 2 390 174**
**US-A- 3 305 991**
**US-A- 3 555 131**
**US-A- 3 838 241**
**US-A- 3 879 908**

(73) Proprietor : **Monzon Indave, Martin**
**Rios Rosas 46**
**Madrid (ES)**

(72) Inventor : **Monzon Indave, Martin**
**Rios Rosas 46**
**Madrid (ES)**

(74) Representative : **Fisher, Bernard et al**
**Raworth, Moss & Cook 36 Sydenham Road**
**Croydon Surrey CR0 2EF (GB)**

EP 0 094 809 B2

## Description

This invention provides an apparatus or installation for the manufacture of a compound panel comprising a metal framework with a lightweight core, suitable for use in building construction.

The metal framework of the panel is a three-dimensional wire grill or grating, normally in the form of two parallel meshes joined together by a series of wires welded to them, hereinafter referred to as connectors.

The lightweight core may be a layer of foam resin or dense box material, fibre or plastics, with reinforcing walls which will allow a segment of wire easily to pass through it.

These panels can be building elements used in the construction as walls or flooring and then coated with resistant mortar on both sides ; the panels can easily be joined to one another on the building site by conventional means. Known panels of this type are described in US-A-3555131 and are made with very fine wire (2 mm gauge, and mesh opening of 50 mm) and were manufactured according to the following process :

1) The vertical meshes of the panel were preconstructed in ladderlike form, that is, with two parallel wires between which short cross-members were welded.

2) These elements were inserted in welding machines in a vertical position, and crosswires were welded to them to form the complete spatial structure.

3) These structures were slightly sunk or embedded in a sand bed which was made to advance upon a conveyor belt, and a foam resin was sprayed on them to form the lightweight core.

The panels were constructed in standard sizes (5 m × 1.20 m, for example, making it necessary later to cut them on the job, with the consequential losses and expense.

Production according to the method described in the U.S. patent is known to have taken place in large sheds or buildings (of an area of more than 500 m²) which demanded costly investment and full-time personnel.

In FR-A-2177030 (which corresponds to US-A-3838241) a fundamentally different approach to panel making is disclosed from that of the present invention. In the French patent a wire matrix is formed first and then the core is formed within the matrix, whereas in the present invention the core is provided first and the wire matrix is then formed around it. The apparatus of the French patent therefore suffers from an inherent inflexibility of operation which does not afflict the apparatus of the present invention.

According to the invention there is provided an apparatus for the manufacture by a continuous process of compound panels for building construction, said panels being of variable cross-section and of any desired shape and comprising a metallic framework and a lightweight core, the metallic framework consisting of a three-dimensional wire grille or grating generally presented in the form of two parallel meshes joined by a series of connector-wires welded to them, said connector-wires being inclined with respect to the wires of the meshes, the lightweight core consisting of a layer of foam resin or dense box material, paperboard laminate, fiber or plastics material, provided with reinforcing walls and unresistant to a wire segment passing through it, characterized in that it comprises :

(a) a machine including an intermittent traction and advancing device located within the interim of the machine, means for providing wire mesh, and separating means to introduce said wire mesh in parallel and separated a suitable distance wherein said intermittent traction and advancing machine and said separating means introduces parallel and separated a suitable distance, two sheets of mesh and one sheet of lightweight material into one end of

(b) said machine including means for adjusting said machine to accommodate various thicknesses of said two sheets of mesh and said one sheet of lightweight material,

(c) said intermittent traction and advancing device intermittently moves the two sheets of mesh and the sheet of lightweight material a apparatus for the manufacture by a continuous process of compound panels for building construction, said panels being of variable cross-section and of any desired shape and comprising a metallic framework and a lightweight core the metallic framework consisting of a three-dimensional wire grille or grating generally presented in the form of two parallel meshes joined by a series of connector-wires welded to them, said connector-wires being inclined with respect to the wires of the meshes, the lightweight core consisting of a layer of foam resin or dense box material, paperboard laminate, fiber or plastics material, unresistant to a wire segment passing through it, comprising a machine including an intermittent traction and advancing device located within the interim of the machine, means for providing wire mesh, and separating means to introduce said wire mesh in parallel and separated a suitable distance wherein said intermittent traction and advancing machine and said separating means introduces parallel and separated a suitable distance, two sheets of mesh and one sheet of lightweight material into one end of said machine, said machine including means for adjusting said machine to accommodate various thicknesses of said two sheets of mesh and said one sheet of lightweight material, said intermittent traction and advancing device intermittently moves the two sheets of mesh and the sheet of lightweight material a regulated distance to a first section of said machine, until they are placed in front of a fastening device including a vertical battery of discharges to which a dispensing device feeds wire driven by the fastening device into the sheet of lightweight material, the ends of said wire resting against the longitudinal wires of the two meshes which advance intermittently inside the machine; the intermittent traction and advancing device moves the unit thus constituted, with the connector-wires in place, to a second section of said machine in front of a column of electrodes for welding the connector-wires segments to the longitudinal wires of the two meshes ; the intermittent traction and advancing device moves the panels, along with the imbedded connector elements, to a third section of said machine ; and means for automatically controlling the operation of the machinery. EP-A-0 069 108, which falls within the terms of Article 54(3) of the EPC, discloses an regulated distance to a first section of said machine, until they are placed in front of

(d) a fastening device including a vertical battery of discharges to which

(e) a dispensing device feeds a series of connector-wire segments which are then driven by the fastening device into the sheet of lightweight material, the ends of said wire segments resting against the longitudinal wires of the two meshes which advance intermittently inside the machine;

(f) the intermittent traction and advancing device moves the unit thus constituted, with the connector-wires in place, to a second section of said machine in front of

(g) a column of electrodes for welding the connector-wire segments to the longitudinal wires of the two meshes ;

(h) the intermittent traction and advancing device moves the panels, along with the imbedded connector elements, to a third section of said machine in front of

(i) a saw device containing one or more disk, band or laser beam saws which cut the panels to the desired size ; and

(j) means for automatically controlling the operation of the machinery.

In the first section of the installation, the manipulation of thousands of units of wire segments presents difficulties in the feeding of the machine, since any trouble or flaw could cause jamming. To avoid this, resort can be made to an alternative process somewhat similar to that used in stapling machines.

First, a series of connector wires are joined back-to-back in the form of combs, and their teeth or prongs are gummed with a lacquer to hold them together on a plane. The machine is fed with packs of combs in a process much more orderly than handling loose wires. In addition, one load of wires can be sufficient for a full day's work by the machine so that there is no longer any need to continuously load the hoppers.

The subsequent detachment of the wires from each comb, one by one for their insertion, is performed by a guillotine similar to that used in staplers, which places the wire in front of a gun fastener which thereupon drives it into the lightweight core.

The connectors may also be joined to form a continuous and flexible comb roll, using an elastic bonding lacquer with an adhesive support backing. In such a case the connectors are fed from comb rolls suspended above the machine.

The combs are made outside the machine in a continuous process employing a lacquer applicator, in infrared dryer and a cutter.

In the second section of the installation, the welders grouped in columns advance and retract as the mesh passes, and it is fundamental that their electrodes always locate with a certain exactness, by pressure upon it, the cross formed by the end of the connector and the longitudinal wire of the mesh.

To achieve this, in a development of the invention, a mechanism has been selected by means of which the mesh, during its advance inside the machine, is drawn over a smooth belt or idler rollers, propelled by a retractable hook which intermittently pulls against a vertical wire of the mesh. The system of fastening the meshes and the polystyrene sheet to a continuous conveyor belt or endless chain moved by constant impulses has been discarded.

The advantage of the device adopted is that even though there are panels of imperfect size (within a normal tolerance) which differ slightly from the fixed advance rate of the machine (adapted to a standard opening), there is no accumulation of defects or a maladjustment in the positioning of the said crosses facing the electrodes.

Naturally, there is a hook on each side for each mesh, and two on each side make traction smoother and serve to overcome any possible snag of the mesh roll.

A special embodiment of the installation is movable, and can be transported by truck to a job site. Another improvement is the provision of means for adhering, to one side of the lightweight core and prior to placement of the corresponding wire mesh, an aluminium or plastics sheet to serve as a vapour barrier.

In the present invention the panels are made with larger mesh sections (approximately 10 × 10 cms) and with heavier wire (from 2.5 mm and up) than the known panels disclosed hereinbefore, thereby simplifying the process considerably, greatly reducing cost and introducing the innovation of manufacture of the panel in an endless sheet which can be cut to an exact size as it exits from the machine. Only one continuous machine is required for the entire process, and the installation can be carried easily by truck to the construction site (as it occupies a space smaller than 25 m²).

A basic factor in the feasibility of this new system of manufacture has been the renunciation of a great density of fine mesh, which was thought necessary to prevent the sprayed mortar from falling off ; however, experience has shown that there is fully satisfactory adherence with a 10 × 10 cms opening having one connector in each panel, with care in the spraying of the mortar which should be applied in two layers, one several hours after the other, and with scraping or scratching of the surface of the lightweight core to give it a rough surface.

Another basic factor has been the extensive selection of any suitable lightweight foam or paperboard which can be used, provided it can hold the driven wires ; in the prior art system, it was first necessary to make the wire structure, then spray its interior with the foam resin core.

It would be difficult to use the system described in this invention with the fine wire meshes previously used, since the great number of connectors and the reduced space for inserting the electrodes between the wires would greatly hinder the process.

Increased wire gauge is a notable improvement offered by the system, since there is greater resistance to rust (especially in storage at the building site), greater resistance to impacts during handling and greater rigidity of the panel during the process of assembly and concreting.

Owing to their function, connectors must be protected against rust, for which reason their composition can be important inasmuch as in certain cases the process of manufacture of the panels requires preliminary preparation. If the connectors are of stainless steel, the process is the normal one previously explained, since stainless steel is weldable. But, if they are of galvanized iron, their ends must be denuded or pickled so that they can be welded. This is done by introducing the packs of connector combs by their teeth or prongs in an acid bath for several minutes at a depth of some 10 mm, following which they are washed in a neutral solution.

If the surface of the connectors is plasticised or impregnated with already hardened resin, roll wire is used which is straightened and then cut into measured segments, some 10 mm of the ends being ground or sharpened in an automatic machine, thereby becoming weldable where they intersect the mesh wires.

According to the process described, it is thus possible to manufacture panels of varying cross-section or of many shapes, bending the two principal meshes as desired and adapting the length of the connectors to them, giving the lightweight core a foam conforming to the exterior surface of the meshes.

Before describing the installation, the following should be noted which determines one aspect of the process. The panels are to be rectangular, the longer side coinciding with the perpendicular walls. The diameter of the connectors approximates that of the mesh wires, and said connectors are welded to the longitudinal wires of the panels. They are inclined with respect to said longitudinal wires of the panels, for the purpose of absorbing the shear stresses produced between the two hard layers of the concreted panel. In summary, the longitudinal wires of the panel (those parallel to the major axis) are welded obliquely to the connectors, and thus it is best that the panel be made lying on its side (on a vertical plane, with its major axis horizontal).

Another improved embodiment of the invention includes adjacent auxiliary machines for producing the mesh from plain wire and, in substitution of a roll of sheeting of lightweight material which could be used, provision is made for a likewise adjacent extruder of said lightweight material which automatically extrudes the sheeting from raw resin foam.

The process of continuous feed of the lightweight core has been initially conceived on the basis of foam material (such as polystyrene), continuously manufactured in an extension preceding the panel-making machine. But it is possible that such material may not be profitable or usable for other reasons, making it necessary to consider continuous manufacture of the core from a paperboard base in an extension preceding the said machine.

In one such extension, manufacture commences from three rolls of paperboard.

The upper and lower outer surfaces of a continuous box-like or walled rectangular tube paperboard material proceed from respective parallel rolls of paperboard.

The heart or core between the two outer layers is a longitudinally-crimped prismatic roll of crenellated or dentated cross-section. Said crimped roll is obtained by means of a slitting mechanism and successive wheels which crease the paperboard to the eventual crenellated form, exerting pressure downward and laterally, which crimped roll is then glued or stapled to the upper and lower rolls to form said rigid boxlike material.

The upper or lower outer layer of the boxlike material can have a slightly curved cross-section, of special interest for manufacturing core as flooring.

The paperboard must undergo previous or posterior treatment based on anti-moisture resins, so that it is not affected by the mortar or concrete which will come in contact with it or by atmospheric humidity when the material is stacked on the job site, prior to use.

To facilitate the fastening of the connector wires, their points are beveled or chamfered for easier passage through the paperboard. This is done by cutting packs of wires obliquely with the disk of a saw.

Another improvement introduced is a panel-feeding arrangement followed by a manual stapling or spot-welding device, for joining the panels together to form the meshes. Also, an arrangement is provided for feeding panels of the said material, followed by a manual glueing or stapling device for joining the panels.

Finally, the installation can be adapted to manufacture elements of varying core thickness, and to fasten connector-wire segments of different lengths.

To be able to introduce different thicknesses of lightweight core and thus vary the thickness of the panel, the structure of the installation must be slightly modified.

The machine has a plane of symmetry coinciding with that of the panel during its manufacture. To make panels of different thickness the machine is divided along said plane, to either separate or bring together the two resulting halves. One of the halves remains fixed, while the other moves perpendicularly on wheels until blocked at the required distance.

In the selection of the geometry of the panel, certain dimensions must be invariable so as not to excessively complicate the machine, within the required degrees of regulation. These fixed parameters can be :

The dimensions of the mesh panel.

The diameter of the mesh and of the connector.

The distance between the mesh surface and the surface of the confronting core.

The distances from the weld-point of the connectors to the two adjacent junction points, which must be constant.

Instead of these fixed parameters, others can be fixed without varying the essence of the machine.

Of great important for regulating the width of the machine is a guide device which maintains the lightweight core and meshes at the proper distance during the manufacturing process. This is a double series of welded vertical and horizontal guide pins, which act as separators between mesh and core and which cover a zone from the column of welders to the entrance of the mesh, a distance of a minimum of three metres.

Upon "starting" the machine, it is important to maintain the relative position of the connector-fastening batteries and of the column of welders invariable with respect to the cited network of separator guide pins, which is on the same side.

The connector magazines contain partitions which permit the housing of connectors of different lengths. The discharge needles are of maximum length and serve for all cases. As the points of incidence of the connectors in relation to the longitudinal wires of the meshes must always be (repeat, must always be), the same distance from the neighbouring junction points (so that the welders are always in front of an intersection of wires), it is necessary to vary the angle of insertion (of the connectors with respect to the discharge needles), which will be of lesser inclination the greater the thickness of the panel.

To widen the machine, first the movable half is unblocked and is moved parallel to itself to the desired width ; it is blocked once more, and immediately the angle of incidence of the connector fasteners is varied so that the connectors cross with the longitudinal wires of the meshes at the cited fixed points, and thus the electrodes of the welder tongs then perform their function without longitudinal movement, that is, they move only in perpendicular direction toward the surface of the meshes.

Embodiments of the invention will now be described by way of example, reference being made to the accompanying drawings, in which :-

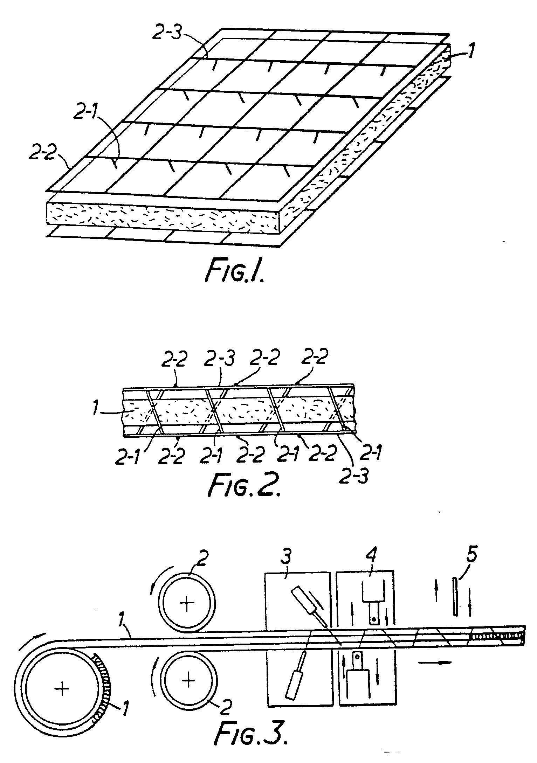

Fig. 1 is a diagram in perspective of a panel made in an embodiment of an installation according to the invention, with the elements comprising it,

Fig. 2 represents a cross-section of the panel from the longitudinal or transverse direction,

Fig. 3 is a side view of the installation,

Fig. 4 shows the same installation in plan view,

Fig. 5 roughly shows a fastening device,

Fig. 6 is a diagram of an arrangement for feeding connectors to the fastening device,

Fig. 7 illustrates a comb of connectors, with the central portion daubed with lacquer,

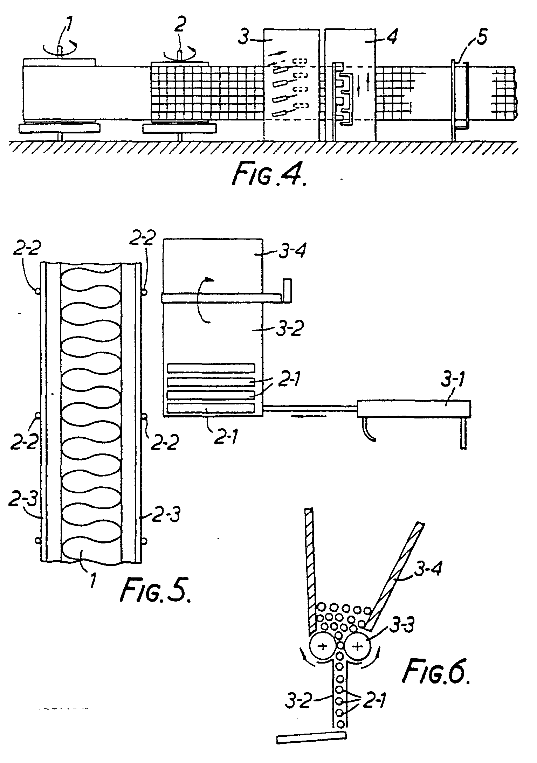

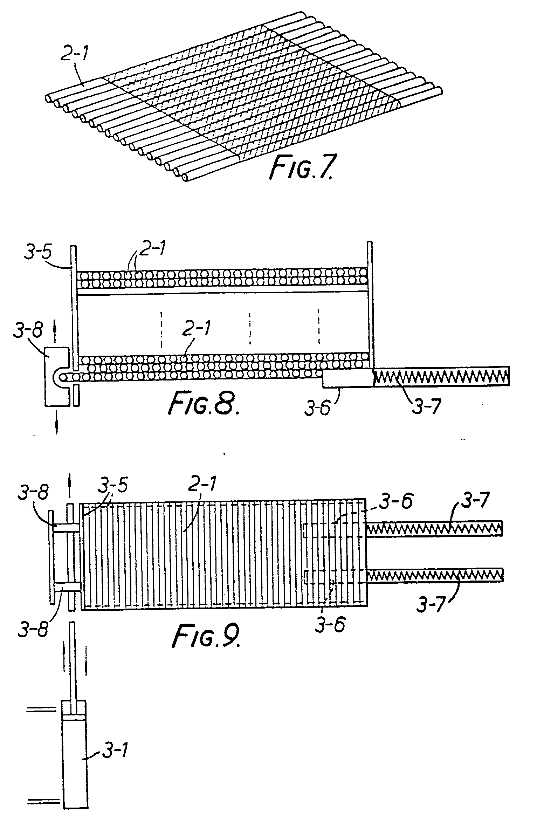

Fig. 8 is a side view and Fig. 9 a plan view of another connector feeder-driver which can be substituted for the hoppers with extractor rollers as shown in Fig. 6. In the box-frame 3-5 of Figs. 8 and 9, the superimposed combs 2-1 are placed. The comb at the bottom is pushed by two rods 3-6, propelled in turn by springs 3-7. With a vertical movement, a guillotine 3-8 separates one by one the end wires housed in some slots and places them in front of the discharge needles 3-1. When the pusher 3-6 has propelled the last wire in the bottom comb it is pneumatically returned to its original starting position, permitting the next comb to drop into place by gravity, and the fastening cycle begins again,

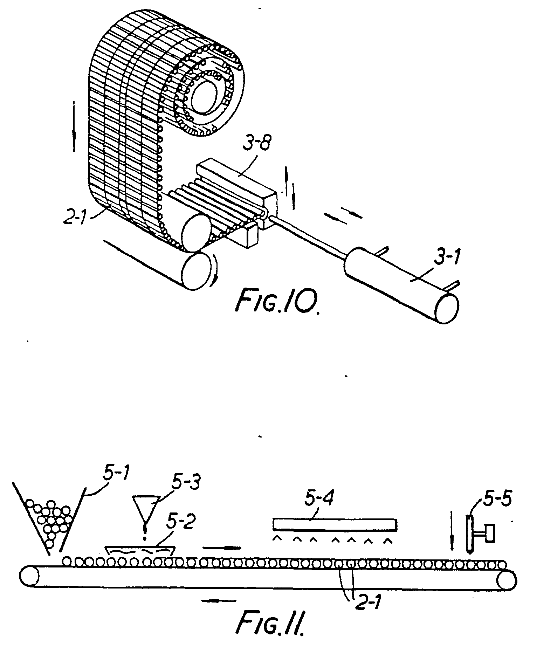

Fig. 10 shows the discharge needle 3-1, which drives the wire which has already been separated from the comb 2-1 by the action of the guillotine 3-8. This is a continuous flexible comb variation on the embodiment of flat rigid combs as illustrated in Figs. 8 and 9. The roll is suspended above so as not to occupy space in the centre of the machine,

Fig. 11 illustrates a device for making the combs of wires. The hopper 5-1 drops the wires upon a conveyor belt ; the viscous lacquer in hopper 5-3 drips upon the dispenser ring 5-2 and is solidified to film upon being heated by the infrared lamp 5-4 ; the continuous matting of wires is cut into combs with the disk 5-5,

Fig. 12 is a partial lateral view of the installation, and the sectional end view of Fig. 13 shows the retractable hooks which push the vertical wires of the meshes in their advance,

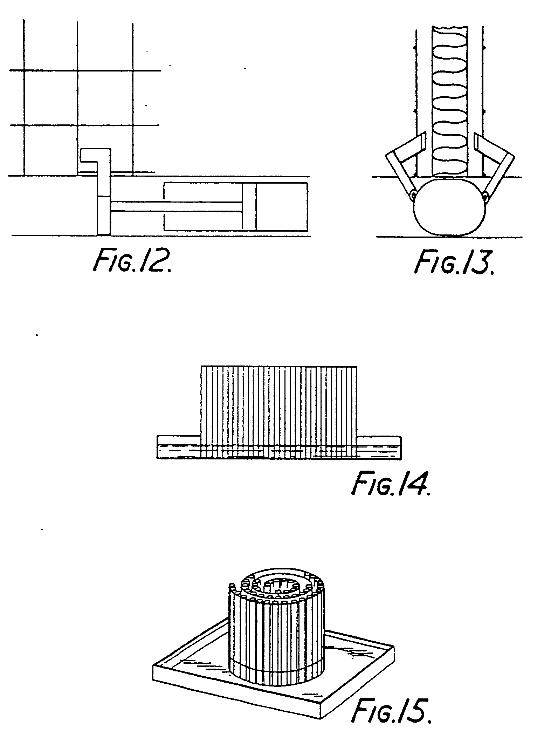

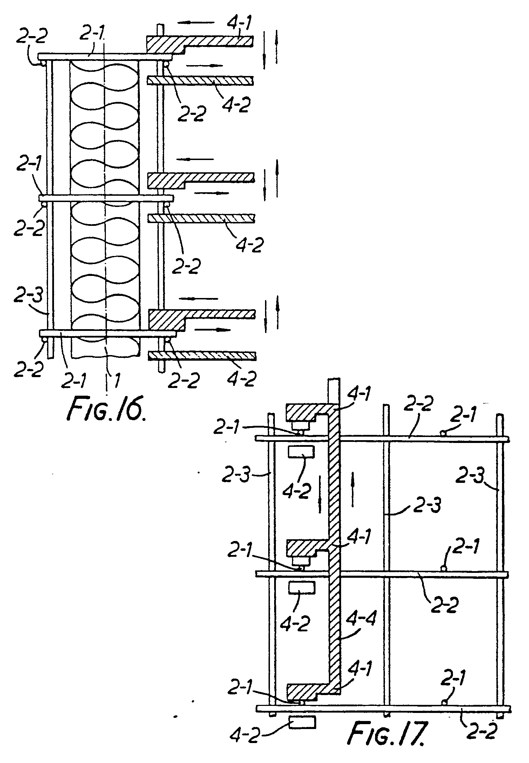

Figs. 14 and 15 illustrate pickling in a tray, of the ends of the connector wires 2-1, either in the rigid flat comb or flexible roll arrangement, the units being placed with the wires in upright position in an acid bath 10 mm deep,

Fig. 16 shows one of the welding columns of the installation, in the position in which the column of electrodes has been advanced to the welding position, while Fig. 17 is a view of the welding column in the phase of execution of the welding operation,

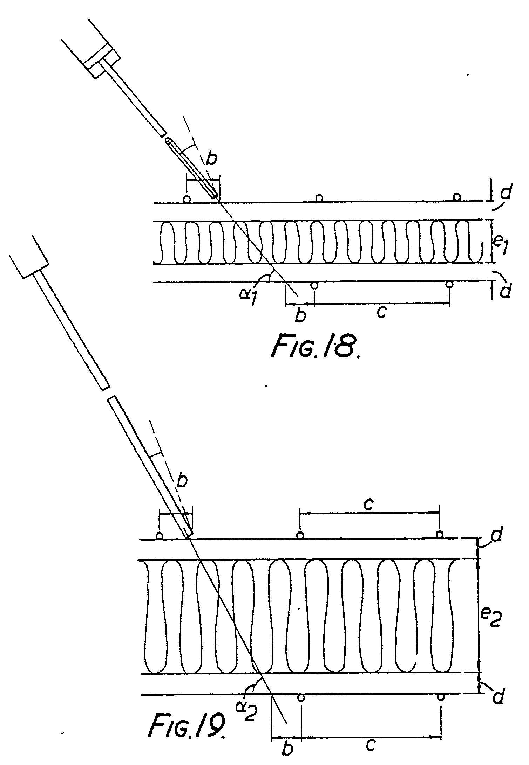

Figs. 18 and 19 show the invariable parameters

     c = mesh panel

     d = distance between mesh and core

     b = distance to the adjacent junction from the point of intersection of connector and longitudinal wire of the mesh.

Variable on the other hand, are the width of the core $e_1$ or $e_2$, and the angle of incidence of the connector with respect to the mesh 2, which is greater as the thickness of the core increases,

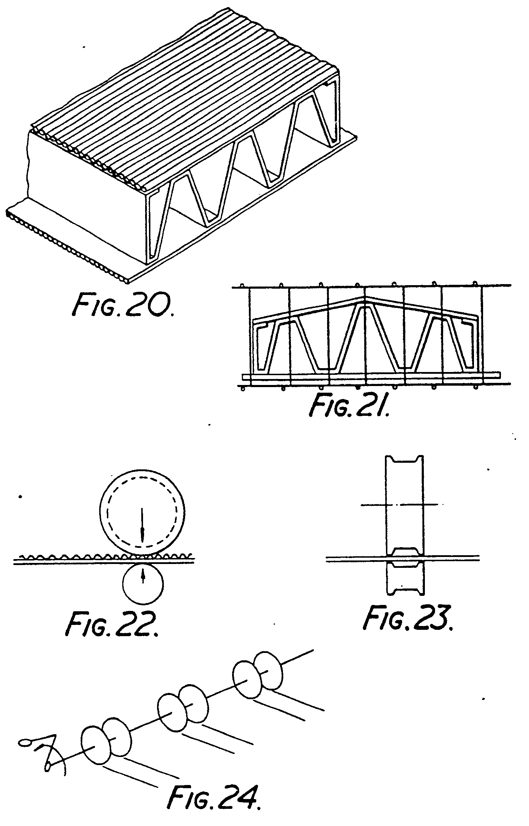

Fig. 20 is a view in perspective of a continuous box-like paperboard as it enters the machine, ready to be pierced by the connector wires,

Fig. 21 is a cross-section of a paperboard box with the upper portion arched (a convenient form for recessing flooring, in the manner of a vault). The box is seen pierced by the connector wires,

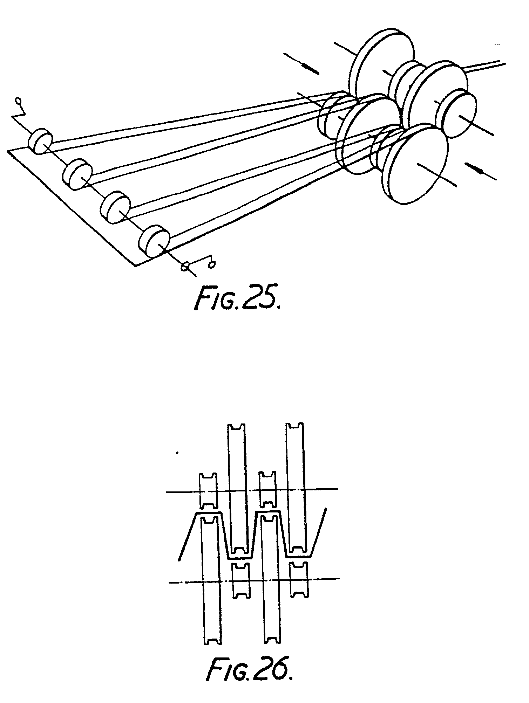

Figs. 22, 23 and 24 illustrate how the slitting rollers mark a groove or trench in the crimped paperboard (formed by smooth paper glued to wrinkled or corrugated paper), and show the successive fold lines, and

In Figs. 25 and 26, the paperboard is shaped and propelled by some groups of wheels, which come together transversely as the paperboard advances and the rough relief gradually increases.

The machine functions in the following manner :

The lightweight core 1 is inserted in the installation from roll 1, represented in Figs. 3 and 4. Synchronous with the movement of the core, the upper and lower wire grilles 2, comprising the transverse wires 2-2 and the longitudinal wires 2-3, unroll from respective rolls 2 until they reach the fastener device 3, from which the connectors 2-1 are discharged and pass through the core 1, made for example of foam, by means of dischargers 3-1 similar to injection syringes, the needle of which propels the pertinent connector 2-1 located in the lowermost position of the series of connectors contained in the loader or magazine 3-2. Upon being propelled or discharged, the connector is lodged inside the core against the transverse wires 2-2, ready to be welded at its ends in the following phase.

The loader 3-2, represented particularly in Figs. 5 and 6, is fed from the hopper 3-4, the bottom of which contains two rollers 3-3 which turn in opposite directions and propel the connector wires one by one into the fastening device.

From the fastening device 3, the unit of meshes 2 and lightweight core 1 with connectors 2-1 embedded in the latter advances intermittently, propelled by the traction system of the installation, so that the connectors 2-1 are finally placed in front of the vertical battery of electrodes (Figs. 3 and 4).

In Figs. 16 and 17 only the welding column on one side of the machine has been represented, since the other column is identical. The upper electrodes 4-1 of the column are solid with a common vertical flange, and the lower electrodes 4-2 are solid with another parallel flange or are free and are operated pneumatically.

In the open position, the column is made to advance pneumatically to the position shown in Fig. 17, where the electrodes approach and resistance weld, aided by compression, the pairs of wires, for example 2-1 and 2-2. If the installed power does not permit this (for example, if the work is being done on the job site), the welding equipment could be modified by making cascade stippling, that is, simultaneously pressuring the wires in column but welding one after another.

Following the welding operation, all that remains is the cutting of the panels to size. A saw 5 (see Figs. 3 and 4) makes the cuts in the transverse direction if a band saw, or vertically if a disk saw or laser beam cutter (in the last case the cut is cleaner).

The preceding description must be considered purely illustrative and in no way limitative, and any and all variations, substitutions of material, etc., may be included which fall within the scope of the following claims.

## Claims

1. An apparatus for the manufacture by a continuous process of compound panels for building construction, said panels being of variable cross-section and of any desired shape and comprising a metallic framework and a lightweight core (1), the metallic framework consisting of a three-dimensional wire grille or grating generally presented in the form of two parallel meshes (2) joined by a series of connector-wires (2-1) welded to them, said connector-wires (2-1) being inclined with respect to the wires (2-2, 2-3) of the meshes (2), the lightweight core (1) consisting of a layer of foam resin or dense box material, paperboard laminate, fiber or plastics material, provided with reinforcing walls and unresistant to a wire segment passing through it, characterized in that it comprises :

(a) a machine including an intermittent traction and advancing device located within the interim of the machine, means for providing wire mesh (2), and separating means to introduce said wire mesh in parallel and separated a suitable distance wherein said intermittent traction and advancing machine and said separating means introduces parallel and separated a suitable distance, two sheets of mesh (2) and one sheet of lightweight material (1) into one end of said machine,

(b) said machine including means for adjusting said machine to accommodate various thicknesses of said two sheets of mesh (2) and said one sheet of lightweight material (1),

(c) said intermittent traction and advancing device intermittently moves the two sheets of mesh (2) and the sheet of lightweight material (1) a regulated distance to a first section of said machine, until they are placed in front of

(d) a fastening device (3) including a vertical battery of discharges (3-1) to which

(e) a dispensing device (3-2) feeds a series of connector-wire segments (2-1) which are then driven by the fastening device (3) into the sheet of lightweight material (1), the ends of said wire segments (2-1) resting against the longitudinal wires (2-3) of the two meshes which advance intermittently inside the machine ;

(f) the intermittent traction and advancing device moves the unit thus constituted, with the connector-wires (2-1) in place, to a second section of said machine in front of

(g) a column of electrodes (4) for welding the connector-wire segments (2-1) to the longitudinal wires (2-3) of the two meshes ;

(h) the intermittent traction and advancing device moves the panels, along with the imbedded connector elements (2-1), to a third section of said machine in front of

(i) a saw device (5) containing one or more disk, band or laser beam saws which cut the panels to the desired size ; and

(j) means for automatically controlling the operation of the machinery.

2. An apparatus according to claim 1, wherein said installation is mounted on an integral sized frame and is adapted to be transported by truck to a construction site.

3. An apparatus according to claim 1 or claim 2, characterized in that it contains some means for adhering, to one of the sides of the lightweight core (1) prior to placement of the corresponding wire mesh (2), an aluminium or plastics sheet to serve as a vapor barrier.

4. An apparatus according to any one of claims 1 to 3, wherein said means for providing the wire mesh (2) are respective adjacent auxiliary machines which produce the mesh (2) starting from common wire, and said lightweight material, provided for by an adjacent machine for extrusion of the lightweight material, said machine automatically extruding the sheeting from raw resin foam.

5. An apparatus according to any one of claims 1 to 3 wherein said means for providing wire mesh (2) are mesh rolls and said lightweight core (1) is provided by a roll of lightweight material.

6. An apparatus according to any one of claims 1 to 3, characterized in that provision is made for a panel-feeding arrangement followed by a manual stapling or spot-welding device which joins the panels together to form the meshes (2).

7. An apparatus according to any one of claims 1 to 3, characterized in that provision is made for an arrangement for feeding panels of such material, followed by a manual glueing or stapling device for joining the panels.

8. An apparatus according to any one of the preceding claims, characterized in that it is adapted to manufacture elements having cores (1) of varying thickness and to insert connector-wire segments (2-1) of varying length.

9. An apparatus according to any one of the preceding claims, wherein said intermittent traction and advancing device includes at least one retractable rod having an engaging surface and being located beneath a panel formed by the elements advanced by the intermittent pushing of the vertical wires (2-2) of the mesh, the constant and regulated advance distance being equal to the length of a mesh opening and in that after each advance is completed each said engaging surface of said rod is separated laterally by some mechanical means to keep each said rod from fouling with the vertical wires (2-2) of the mesh upon returning to their original position, that the lightweight core (1) is held fast to the meshes (2) and simultaneously clamped around a wire of each mesh.

10. An apparatus according to any one of the preceding claims, characterized in that the connectors (2-1) are handled in bulk, as flat or flexible combs in roll form, held together with lacquer or alternatively by adhesive tape, said combs entering the machine by means of a drive element (3-6) which propels the comb units to a guillotine (3-8) which separates each wire one by one, said separated wires (2-1) then being driven into the lightweight core (1) by said fastening device (3).

11. An apparatus according to any one of the preceding claims, wherein the connector wires (2-1) are of normal steel and undergo surface treatment prior to insertion of the machine, said connector wires (2-1) being subjected to denuding by pickling to thus permit said wires to be welded to the meshes (2).

12. An apparatus according to any one of the preceding claims, wherein for regulation of the width of the machine it is divided into two halves on a symmetrical plane, one half being movable transversally, the columns of the wire-fastening devices (3) being rotary mounted so that regardless of the thickness of a panel, the points at which the connectors (2-1) cross with the mesh wires (2) are always in the same position with respect to the adjacent junction points, and in such manner that the welding electrodes (4) always face an intersection of a connector (2-1) with a longitudinal wire (2-3) of the mesh.

13. An apparatus according to any one of the preceding claims, wherein said lightweight core (1) is a paperboard core, said paperboard core being formed from three rolls of paperboard two of which form flat upper and lower core surfaces, and said machine includes a headpiece containing a system for deploying and glueing the flat upper and lower core surfaces to the ridges of a third continuous sheet of paperboard wrinkled folded in crenellated form, such folding of said central layer of the core being realized by means of some crimping rollers the folding then proceeding progressively by several series of rollers which give increasingly more height to the folds of the paperboard as it advances, said rollers simultaneously performing the function of advancing the paperboard.

14. A method of manufacturing compound panels for building construction, said panels being of variable cross-section and of any desired shape and comprising a metallic framework and a lightweight core (1), the metallic framework consisting of a three-dimensional wire grille or grating generally presented in the form of two parallel meshes (2) joined by a series of connector wires (2-1) welded to them, said connector wires (2-1) being inclined with respect to the wires (2-2, 2-3) of the meshes (2), the lightweight core (1) consisting of a layer of foam resin or dense box material, paperboard laminate, fiber or plastics material, provided with reinforcing walls and unresistant to a wire segment passing through it, comprising the steps of :

introducing two sheets of mesh (2) and one sheet of lightweight material (1), parallel and separated a suitable distance, into one end of a machine by means of an intermittent traction and advancing device located with said machine and means for separating said two sheets of wire mesh (2) in parallel, said two sheets of wire mesh (2) being supplied by wire mesh providing means (2), adjusting said machine by adjusting means to permit said machine to accommodate various thickness of said two sheets of mesh (2) and said sheet of lightweight material (1) to produce compound panels of various thicknesses after a third stage of operation ; moving intermittently said two sheets of mesh (2) and said sheet of lightweight material (1) a regulated distance to a first stage of operation by means of the intermittent traction and advancing device ;

driving a series of connector-wire segments (2-1) into said sheet of lightweight material (1) at the first stage of operation, the ends of said wire segments (2-1) resting against longitudinal wires (2-3) of said two meshes (2) which advance intermittently inside the machine, said connector-wire segments (2-1) being driven by a vertical battery of dischargers (3-1) of a fastening device (3), a dispensing device (3-2) feeding said connector-wire segments (2-1) to said fastening device (3), said fastening device (3) and said dispensing device (3-2) being located at said first stage of operation ;

moving the unit thus constructed, with the connector-wires (2-1) in place by said intermittent traction and advancing device to a second stage of operation;

welding said connector-wire segments (2-1) to said longitudinal wires (2-3) of said two meshes (2) at said second stage of the operation by means of a column of electrodes (4) to form panels ;

moving said panels to a third stage of operation by said intermittent traction and advancing device ;

cutting said panels to a desired size by means of a saw device (5) including at least one disk, band or laser beam saw ; said stages of operation being automatically controlled.

15. An apparatus for the manufacture by a continuous process of compound panels, said panels being of variable cross-section and of any desired shape and comprising a metallic framework and a lightweight core (1), the metallic framework, consisting of a three-dimensional wire grille or grating generally presented in the form of two parallel meshes (2) joined by a series of connector wires (2-1) welded to them, said connector wires (2-1) being inclined with respect of the wires (2-2, 2-3) of the meshes (2), the lightweight core (1) consisting of a layer of foam resin or dense box material, paperboard laminate, fiber or plastics material, provided with reinforcing walls and unresistant to a wire segment passing through it, comprising in combination :

means for providing wire mesh (2) ;

means to separate said wire mesh (2) a suitable distance and to maintain said wire mesh (2) in parallel ;

a machine including an intermittent traction and advancing device wherein said intermittent traction and advancing device introduces two sheets of mesh (2) and one sheet of lightweight material (1), parallel and separated a suitable distance into one end of said machine ;

said machine including means for adjusting said machine to accommodate various thicknesses of said two sheets of mesh (2) and said one sheet of lightweight material (1) to produce compound panels of various thicknesses at the completion of a third stage of operation ;

said intermittent traction and advancing device intermittently moves said two sheets of mesh (2) and said one sheet of lightweight material (1) a regulated distance to a first stage of operation ;

a dispensing device (3-2) and a fastening device (3), including a vertical battery of dischargers (3-1) and a fastening device (3), each located at the first stage of operation, said dispensing device (3-2) feeding a series of connector wire segments (2-1) to said fastener (3), said vertical battery of dischargers (3-1) then drives said connector wire segments (2-1) into said sheet of lightweight material (1), the end of said wire segments (2-1) resting against longitudinal wires (2-3) of said two meshes (2) which advance intermittently inside the machine ;

said intermittent traction and advancing device moves the unit thus constituted with said connector-wires (2-1) in place to a second stage of operation ;

a column of electrodes (4) located at said second stage of operation for welding the connector-wire segments (2-1) to the longitudinal wires (2-3) of said two meshes (2) thereby forming panels ;

said intermittent traction and advancing device moves said panels to the third stage of operation ; a saw device (5) located at the third stage of operation, said saw device (5) including at least one disk, band or laser beam saw for cutting the panels to a desired size ; and

means for automatically controlling the first, second and third stages of operation.

16. An apparatus according to any one of the preceding claims wherein said connector-wires (2-1) are made of normal steel and undergo surface treatment prior to insertion in the machine, said connector-wires (2-1) being subjected to denuding by grinding some 10 mm along each point to thus permit said wires to be welded to the meshes (2).

17. An apparatus according to any one of the preceding claims wherein said intermittent traction and advancing device carries out all the intermittent movements of said two sheets of wire mesh (2) and said sheet of lightweight core (1) throughout the three sections of the machinery.

**Patentansprüche**

1. Vorrichtung zur Herstellung von Verbundplatten in einem kontinuierlichen Verfahren, für die Errichtung von Bauwerken, welche Platten einen veränderlichen Querschnitt und eine beliebige gewünschte Gestalt haben und ein metallisches Rahmenwerk und einen Leichtkern (1) aufweisen, wobei das metallische Rahmenwerk aus einem dreidimensionalen Drahtgitter oder -gitterwerk besteht, das allgemein in der Form von zwei parallelen Geflechten (2) vorliegt, die durch eine Reihe von mit ihnen verschweißten Verbindungsdrähten (2-1) verbunden sind, wobei die Verbindungsdrähte (2-1) relativ zu den Drähten (2-2, 2-3) der Geflechte (2) schräg verlaufen, wobei der Leichtkern (1) aus einer Schicht aus Schaumkunststoff oder dichtem Kartonmaterial, Pappenlaminat, Faser- oder Kunststoffmaterial, versehen mit Verstärkungswänden und nicht widerstandsfähig gegenüber einem hindurchlaufenden Drahtabschnitt, besteht, gekennzeichnet durch :

(a) eine Maschine mit einer intermittierenden Zug- und Vorschubeinrichtung, die in der Maschine angeordnet ist, Mitteln zum Liefern eines Drahtgeflechts (2) und Trennmitteln zum Einführen des Drahtgeflechts parallel und in einem geeigneten Abstand getrennt, wobei die intermittierende Zug- und Vorschubeinrichtung und die Trennmittel parallel und in geeignetem Abstand voneinander zwei Lagen Geflecht (2) und eine Lage Leichtmaterial (1) in ein Ende der Maschine einführen,

(b) welche Maschine Mittel zum Einstellen der Maschine, zur Anpassung an verschiedene Dicken der zwei Geflechtlagen (2) und der eine Leichtmateriallage (1), enthält,

(c) wobei die intermittierende Zug- und Vorschubeinrichtung die zwei Geflechtlagen (2) und die Leichtmateriallage (1) intermittierend eine geregelte Distanz zu einem ersten Abschnitt der Maschine bewegt, bis sie vor

(d) einer Befestigungseinrichtung (3) angeordnet sind, die eine vertikale Batterie von Auslässen (3-1) enthält, denen

(e) eine Abgabeeinrichtung (3-2) eine Reihe von Verbindungsdrahtabschnitten (2-1) zuführt, die dann durch die Befestigungseinrichtung (3) in die Leichtmateriallage (1) getrieben werden, wobei die Enden der Drahtabschnitte (2-1) an den Längsdrähten (2-3) der zwei Geflechte anliegen, die innerhalb der Maschine intermittierend vorrücken ;

(f) wobei die intermittierende Zug- und Vorschubeinrichtung die so gebildete Einheit, mit den Verbindungsdrähten (2-1) an Ort und Stelle, zu einem zweiten Abschnitt der Maschine vor,

(g) eine Säule von Elektroden (4) zum Anschweißen der Verbindungsdrahtabschnitte (2-1) an die Längsdrähte (2-3) der zwei Geflechte bewegt :

(h) wobei die intermittierende Zug- und Vorschubeinrichtung die Platten zusammen mit den eingebetteten Verbindungselementen (2-1) zu einem dritten Abschnitt der Maschine vor (i) eine Sägeeinrichtung (5) bewegt, die eine oder mehrere Scheiben-, Band oder Laserstrahl-Sägen enthält, die die Platten auf die gewünschte Größe schneiden ; und

(j) Mittel zum automatischen Steuern des Betriebs der Maschinerie.

2. Vorrichtung nach Anspruch 1, bei der die Anlage auf einem integralen, in der Größe angepaßten Gestell angebracht und geeignet ist, mit einem Lastwagen zu einer Baustelle transportiert zu werden.

3. Vorrichtung nach Anspruch 1 oder 2, dadurch gekennzeichnet, daß sie Mittel zum Ankleben einer als Dampfsperre dienenden Aluminium - oder Plastikfolie an einer der Selten des Leichtkerns (1) vor der Anbringung des entsprechenden Drahtgeflechts (2) enthält.

4. Vorrichtung nach einem der Ansprüche 1 bis 3, bei der die Mittel zum Liefern des Drahtgeflechts (2) entsprechende benachbarte Zusatzmaschinen sind, die ausgehend von herkömmlichem Draht das Geflecht (2) erzeugen, und das Leichtmaterial durch eine benachbarte Maschine zum Extrudieren des Leichtmaterials zur Verfügung gestellt wird, welche Maschine automatisch die Bahn aus rohem Kunstharzschaum extrudiert.

5. Vorrichtung nach einem der Ansprüche 1 bis 3, bei der die Mittel zum Liefern des Drahtgeflechts (2) Geflechtrollen sind und der Leichtkern (1) von einer Rolle Leichtmaterial geliefert wird.

6. Vorrichtung nach einem der Ansprüche 1 bis 3, dadurch gekennzeichnet, daß eine Plattenzuführanordnung vorgesehen ist, der eine Handheft- oder Punktschweißeinrichtung nachgeordnet ist, die die Platten miteinander verbindet, um die Geflechte (2) zu bilden.

7. Vorrichtung nach einem der Ansprüche 1 bis 3, dadurch gekennzeichnet, daß eine Anordnung zum Zuführen von Platten aus solchem Material vorgesehen ist, der eine Handklebe- oder Hefteinrichtung nachgeordnet ist, um die Platten zu verbinden.

8. Vorrichtung nach einem der vorhergehenden Ansprüche, dadurch gekennzeichnet, daß sie zur Herstellung von Elementen mit Kernen (1) variierender Dicke und zum Einführen von Verbindungsdrahtabschnitten (2-1) unterschiedlicher Länge eingerichtet ist.

9. Vorrichtung nach einem der vorhergehenden Ansprüche, bei der die intermittierende Zug- und Vorschubeinrichtung zumindest eine zurückziehbare Stange enthält, die eine Eingriffsfläche hat und unterhalb einer Platte angeordnet ist, die durch die Elemente gebildet ist, die durch das intermittierende Schieben der vertikalen Drähte (2-2) des Geflechts vorbewegt werden, wobei die konstante und regulierte Vorschubstrecke gleich der Länge einer Gitteröffnung ist, und nach Beendigung eines jeden Vorschubs jede Stangen-Eingriffsfläche seitlich durch mechanische Mittel getrennt wird, um jede Stange vom Verschmutzen durch die vertikalen Drähte (2-2) des Geflechts bei Rückkehr in die ursprüngliche Position abzuhalten, wobei der Leichtkern (1) fest gegen die Geflechte (2) gehalten und gleichzeitig um einen Draht jedes Geflechts herum geklemmt wird.

10. Vorrichtung nach einem der vorhergehenden Ansprüche, dadurch gekennzeichnet, daß die Verbinder (2-1) unverpackt, als flache oder flexible Kämme in Rollenform, unter Zusammenhalten mit Lack oder aber Klebstoffband, gehandhabt werden, wobei die Kämme in die Maschine mittels eines Antriebselementes (3-6) eintreten, das die Kammeinheiten zu einer Schneidvorrichtung (3-8) vorwärtsbewegt, die die Drähte vereinzelt, wobei die gesonderten Drähte (2-1) dann durch die Befestigungseinrichtung (3) in den Leichtkern (1) getrieben werden.

11. Vorrichtung nach einem der vorhergehenden Ansprüche, bei der die Verbindungsdrähte (2-1) aus normalem Stahl bestehen und eine Oberflächenbehandlung erfahren, wobei vor dem Einführen in die Maschine die Verbindungsdrähte (2-1) durch Beizen freigelegt werden, um so ein Verschweißen der Drähte mit den Geflechten (2) zu ermöglichen.

12. Vorrichtung nach einem der vorhergehenden Ansprüche, bei der zur Regulierung der Breite der Maschine diese in zwei Hälften gemäß einer Symmetrieebene geteilt ist, wobei eine Hälfte querbeweglich ist, wobei die Säulen der Drahtbefestigungseinrichtungen (3) drehbar angebracht sind, so daß ungeachtet der Dicke einer Platte die Stellen, an denen die Verbinder (2-1) die Geflechtdrähte (2) kreuzen, immer in der gleichen Position bezüglich der benachbarten Verbindungspunkte sind, und derart, daß die Schweißelektroden (4) immer einer Schnittstelle eines Verbinders (2-1) mit einem Längsdraht (2-3) des Geflechts zugewandt sind.

13. Vorrichtung nach einem der vorhergehenden Ansprüche, bei der der Leichtkern (1) ein Pappekern ist, der von drei Rollen von Pappe gebildet wird, von denen zwei ebene obere und untere Kernflächen bilden, und die Maschine einen Kopfteil aufweist, der ein System zum Ausziehen und Ankleben der ebenen oberen und unteren Kernflächen an die Rücken einer dritten kontinuierlichen Lage von Pappe enthält, die zinnenförmig umgebogen gefalzt ist, wobei die Falzung der mittleren Schicht des Kerns mit Hilfe von Falzrollen durchgeführt wird, wobei die Falzung dann fortschreitend durch mehrere Reihen von Rollen weitergeführt wird, die den Falten der Pappe bei ihrem Vorschub eine zunehmend größere Höhe verleihen, wobei die Rollen gleichzeitig die Funktion des Vorschubs der Pappe ausüben.

14. Verfahren zum Herstellen von Verbundplatten für Bauwerke, welche Platten einen veränderlichen Querschnitt und eine beliebige gewünschte Gestalt haben und ein metallisches Rahmenwerk und einen Leichtkern (1) aufweisen, wobei das metallische Rahmenwerk aus einem dreidimensionalen Drahtgitter oder -gitterwerk besteht, das allgemein in der Form von zwei parallelen Geflechten (2) vorliegt, die durch eine Reihe von mit ihnen verschweißten Verbindungsdrähten (2-1) verbunden sind, wobei die Verbindungsdrähte (2-1) relativ zu den Drähten (2-2, 2-3) der Geflechte (2) schräg verlaufen, wobei der Leichtkern (1) aus einer Schicht aus Schaumkunststoff oder dichtem Kartonmaterial, Pappenlaminat, Faser- oder Kunststoffmaterial, versehen mit Verstärkungswänden und nicht widerstandsfähig gegenüber einem hindurchlaufenden Drahtabschnitt, besteht, umfassend die Schritte :

Einführen von zwei Lagen Geflecht (2) und einer Lage Leichtmaterial (1), parallel und einen geeigneten Abstand voneinander getrennt, in ein Ende einer Maschine mittels einer intermittierenden Zug- und Vorschubeinrichtung, die an der Maschine angeordnet ist, und Mittel zum Trennen der zwei Drahtgeflechtlagen (2) in Parallellage, wobei die zwei Drahtgeflechtlagen (2) von Drahtgeflechtliefermitteln zugeführt werden, Einstellen der Maschine durch Einstellmittel, um der Maschine zu ermöglichen, verschiedene Dicken der zwei Geflechtlagen (2) und der Leichtmateriallage (1) aufzunehmen, um Verbundplatten verschiedener Dicke nach einer dritten Arbeitsstufe herzustellen ;

intermittierendes Bewegen der zwei Geflechtlagen (2) und der Leichtmateriallage (1) über eine geregelte Distanz in einer ersten Arbeitsstufe mit Hilfe der intermittierenden Zug- und Vorschubeinrichtung ;

Eintreiben einer Reihe von Verbindungsdrahtabschnitten (2-1) in die Leichtmateriallage (1) in der ersten Arbeitsstufe, wobei die Enden der Drahtabschnitte (2-1) an den Längsdrähten (2-3) der zwei Geflechte (2) anliegen, die intermittierend innerhalb der Maschine vorrücken, wobei die Verbindungsdrahtabschnitte (2-1) durch eine vertikale Batterie von Ausstoßeinrichtungen (3-1) einer Befestigungseinrichtung (3) angetrieben werden, eine Abgabeeinrichtung (3-2) die Verbindungsdrahtabschnitte (2-1) zur Befestigungseinrichtung (3) zuführt, die Befestigungseinrichtung (3) und die Abgabeeinrichtung (3-2) in der ersten Arbeitsstufe angeordnet sind ;

Bewegen der so gebildeten Einheit, mit den Verbindungsdrähten (2-1) an Ort und Stelle, durch die intermittierende Zug- und Vorschubeinrichtung zu einer zweiten Arbeitsstufe ;

Anschweißen der Verbindungsdrahtabschnitte (2-1) an den Längsdrähten (2-3) der zwei Geflechte (2) in der zweiten Arbeitsstufe mittels einer Säule von Elektroden (4), um Platten zu bilden ;

Bewegen der Platten zu einer dritten Arbeitsstufe durch die intermittierende Zug- und Vorschubeinrichtung ;

Schneiden der Platten auf die gewünschte Größe mit einer Sägeeinrichtung (5), die zumindest eine Scheiben-, Band oder Laserstrahl-Säge enthält, wobei die Arbeitsstufen automatisch gesteuert werden.

15. Vorrichtung zur Herstellung von Verbundplatten in einem kontinuierlichen Verfahren, welche Platten einen veränderlichen Querschnitt und eine beliebige gewünschte Gestalt haben und ein metallisches Rahmenwerk und einen Leichtkern (1) aufweisen, wobei das metallische Rahmenwerk aus einem dreidimensionalen Drahtgitter oder -gitterwerk besteht, das allgemein in der Form von zwei parallelen Geflechten (2) vorliegt, die durch eine Reihe von mit ihnen verschweißten Verbindungsdrähten (2-1) verbunden sind, wobei die Verbindungsdrähte (2-1) relativ zu den Drähten (2-2, 2-3) der Geflechte (2) schräg verlaufen, wobei der Leichtkern (1) aus einer Schicht aus Schaumkunststoff oder dichtem Kartonmaterial, Pappenlaminat, Faser- oder Kunststoffmaterial, versehen mit Verstärkungswänden und nicht widerstandsfähig gegenüber einem hindurchlaufenden Drahtabschnitt, besteht, aufweisend in Kombination :

Mittel zum Liefern von Drahtgeflecht (2),

Mittel zum Trennen des Drahtgeflechts (2) auf einen geeigneten Abstand und zum Halten des Drahtgeflechts (2) in Parallellage ;

eine Maschine mit einer intermittierenden Zug- und Vorschubeinrichtung, wobei die intermittierende Zug- und Vorschubeinrichtung zwei Geflechtlagen (2) und eine Leichtmateriallage (1) parallel und einen geeigneten Abstand voneinander getrennt in ein Ende der Maschine einführt ;

welche Maschine Mittel zum Einstellen der Maschine enthält, um verschiedene Dicken der zwei Geflechtlagen (2) und der einen Leichtmateriallage (1) aufzunehmen, um Verbundplatten mit unterschiedlichen Dicken bei der Beendigung einer dritten Arbeitsstufe herzustellen ;

welche intermittierende Zug- und Vorschubeinrichtung die zwei Geflechtlagen (2) und die eine Leichtmateriallage (1) über eine geregelte Distanz zu einer ersten Arbeitsstufe bewegt ;

eine Abgabeeinrichtung (3-2) und eine Befestigungseinrichtung (3), mit einer vertikalen Batterie von Ausstoßeinrichtungen (3-1) und einer Befestigungseinrichtung (3), die je in der ersten Arbeitsstufe angeordnet sind, wobei die Abgabeeinrichtung (3-2) eine Reihe von Verbindungsdrahtabschnitten (2-1) zur Befestigungseinrichtung (3) zuführt, die vertikale Batterie von Ausstoßeinrichtungen (3-1) dann die Verbindungsdrahtabschnitte (2-1) in die Leichtmateriallage (1) treibt, wobei die Enden der Drahtabschnitte (2-1) an den Längsdrähten (2-3) der zwei Geflechte (2) anliegen, die in der Maschine intermittierend vorrücken ;

welche intermittierende Zug- und Vorschubeinrichtung die so gebildete Einheit, mit den Verbindungsdrähten (2-1) an Ort und Stelle, zu einer zweiten Arbeitsstufe bewegt ;

eine Säule von Elektroden (4), die in der zweiten Arbeitsstufe angeordnet sind, zum Verschweißen der Verbindungsdrahtabschnitte (2-1) mit den Längsdrähten (2-3) der zwei Geflechte (2), wodurch Platten gebildet werden ;

welche intermittierende Zug- und Vorschubeinrichtung die Platten zur dritten Arbeitsstufe bewegt ;

eine in der dritten Arbeitsstufe angeordnete Sägeeinrichtung (5), die zumindest eine Scheiben-, Band- oder Laserstrahl-Säge zum Schneiden der Platten auf die gewünschte Größe enthält ; und

Mittel zum automatischen Steuern der ersten, zweiten und dritten Arbeitsstufe.

16. Vorrichtung nach einem der vorhergehenden Ansprüche, bei der die Verbindungsdrähte (2-1) aus normalem Stahl hergestellt sind und vor dem Einführen in die Maschine eine Oberflächenbehandlung erfahren, wobei die Verbindungsdrähte (2-1) durch Schleifen ungefähr 10 mm an jeder Spitze freigelegt werden, um ihr Verschweißen mit den Geflechten (2) zu ermöglichen.

17. Vorrichtung nach einem der vorhergehenden Ansprüche, bei der die intermittierende Zug- und Vorschubeinrichtung alle intermittierenden Bewegungen der zwei Drahtgeflechtlagen (2) und der Leichtkernlage (1) durch die drei Abschnitte der Maschinerie ausführt.

## Revendications

1. Appareil destiné à la fabrication par un procédé continu de panneaux composites pour la construction dans le bâtiment, lesdits panneaux étant de section transversale variable et de toute configuration souhaitée et comprenant une ossature métallique et un noyau léger (1), l'ossature métallique consistant en un treillis ou grillage de fils tridimensionnel se présentant de façon générale sous la forme de deux mailles (2) parallèles reliées par une série de fils d'assemblage (2-1) soudés sur ceux-ci, lesdits fils d'assemblage (2-1) étant inclinés par rapport aux fils (2-2, 2-3) des mailles (2), le noyau léger (1) consistant en une couche de résine de mousse ou de matériau d'emballage dense, de feuilles stratifiées de carton, de fibres ou de matériaux plastiques, muni de parois de renforcement et non résistant à un segment de fil le traversant, caractérisé en ce qu'il comprend :

(a) une machine comprenant un dispositif d'avance et de traction intermittentes situé à l'intérieur de la machine, des moyens fournissant la maille de fil (2) et des moyens de séparation pour introduire la maille de fil de façon parallèle et séparée à une distance appropriée, dans laquelle le dispositif d'avancement et de traction intermittentes et le moyen de séparation introduit de façon parallèle et séparé à une distance appropriée, deux feuilles de mailles (2) et une feuille de matériau léger (1) dans une extrémité de la machine,

(b) la machine comprenant des moyens pour deux réglages afin de prendre en compte les différentes épaisseurs des deux feuilles de mailles (2) et de la feuille en matériau léger (1),

(c) le dispositif d'avance et de traction intermittentes fait avancer, de façon intermittente, les deux feuilles de mailles (2) et la feuille de matériau léger (1) sur une distance réglée vers une première section de la machine, jusqu'à ce qu'elle soit placée devant

(d) un dispositif de fixation (3) comprenant une série verticale de déchargeurs (3-1) sur laquelle

(e) un dispositif de distribution (3-2) alimente une série de segments de fils d'assemblage (2-1) qui sont alors entraînés par le dispositif de fixation (3) jusque dans la feuille de matériau léger (1), les extrémités des segments de fils (1) reposant contre les fils longitudinaux (2-3) des deux mailles qui avancent, de façon intermittente, à l'intérieur de la machine ;

(f) le dispositif d'avance et de traction intermittentes déplace l'unité ainsi constituée avec les fils d'assemblage (2-1) en place, en direction d'une seconde section de la machine devant,

(g) une colonne d'électrodes (4) destinées au soudage des segments des fils d'assemblage (2-1) sur les fils longitudinaux (2-3) des deux mailles ;

(h) le dispositif d'avance et de traction intermittentes déplace les panneaux, ainsi que les éléments d'assemblage (2-1) encastrés ou noyés, à destination d'une troisième section de ladite machine devant,

(i) un dispositif de scie (5) contenant une ou plusieurs scies à lame circulaire, scies à ruban ou scies à faisceau laser qui découpe les panneaux à la dimension souhaitée, et

(j) des moyens destinés à commander automatiquement le fonctionnement de la machine.

2. Appareil selon la revendication 1, dans lequel l'ensemble est monté sur une structure monobloc dimensionnée et peut être transporté par camion à destination d'un chantier de construction.

3. Appareil selon la revendication 1 ou 2, caractérisé en ce qu'il contient des moyens conférant l'adhérence sur l'un des côtés du noyau léger (1) préalablement au placement de la maille de fils correspondante (2), une feuille d'aluminium ou de plastique servant d'écran à la vapeur d'eau.

4. Dispositif selon l'une quelconque des revendications 1 à 3, dans lequel les moyens destinés à fournir la maille de fils (2) sont des machines auxiliaires contiguës respectives qui produisent la maille (2) en commençant à partir de fil ordinaire, et des matériaux légers, fournis par une machine contiguë pour l'extrusion du matériau léger, ladite machine extrudant automatiquement les feuilles à partir de la mousse de résine brute.

5. Dispositif selon l'une quelconque des revendications 1 à 3, dans lequel les moyens destinés à fournir la maille de fils (2) sont des rouleaux de mailles et le noyau léger (1) est fourni par un rouleau de matériau léger.

6. Dispositif selon l'une quelconque des revendications 1 à 3, caractérisé en ce que l'on prévoit un agencement d'alimentation de panneaux, suivi d'un dispositif d'agrafage manuel ou de soudure par points qui rassemble les panneaux pour former les mailles (2).

7. Dispositif selon l'une quelconque des revendications 1 à 3, caractérisé en ce qu'il est prévu un agencement destiné à alimenter les panneaux réalisés à partir de tels matériaux, suivi d'un dispositif de collage ou d'agrafage manuels pour l'assemblage des panneaux.

8. Dispositif selon l'une quelconque des revendications précédentes, caractérisé en ce qu'il est apte à fabriquer des éléments comportant des noyaux (1) de différentes épaisseurs et à introduire des segments de fils d'assemblage (2-2) de longueurs différentes.

9. Appareil selon l'une quelconque des revendications précédentes, dans lequel le dispositif d'avance et de traction intermittentes comprend au moins une tige rétractable comportant une surface d'engagement et étant située sous un panneau formé par les éléments qui avancent sous l'action de la poussée intermittente des fils verticaux (2-2) de la maille, la distance d'avance constante et régulée étant égale à la longueur d'une ouverture de maille et dans lequel après que chaque mouvement d'avance est effectué, chaque surface d'engagement de la tige est séparée latéralement par des moyens mécaniques pour empêcher que chaque tige ne vienne interférer avec les fils verticaux (2-2) de la maille lors du retour à la position d'origine, en ce que le noyau léger (1) est maintenu fermement sur les mailles (2) et en ce qu'il est simultanément agrafé autour d'un fil de chaque maille.

10. Appareil selon l'une quelconque des revendications précédentes, caractérisé en ce que les fils d'assemblage (2-1) sont traités en vrac, en tant que peignes, plats ou flexibles, sous forme de rouleaux maintenus ensemble par de la laque ou en variante par un ruban adhésif, les peignes pénétrant dans la machine au moyen d'un élément d'entrainement (3-6) qui propulse les unités de peignes sur une cisaille-guillotine (3-8) qui sépare chaque fil un à un, les fils séparés (2-1) étant alors entraînés jusque dans le noyau léger (1) par le dispositif de fixation (3).

11. Appareil selon l'une quelconque des revendications précédentes, dans lequel les fils d'assemblage (2-1) sont en acier ordinaire et subissent un traitement de surface avant d'être introduits dans la machine, les fils d'assemblage (2-1) étant soumis au dénudage par décapage pour permettre ainsi à ceux-ci d'être soudés sur les mailles (2).

12. Appareil selon l'une quelconque des revendications précédentes, qui pour le réglage de la largeur de la machine, est divisé en deux moitiés sur un plan symétrique, une moitié pouvant se déplacer transversalement, les colonnes des dispositifs de fixation de fils étant montées de façon rotative, de sorte qu'indépendamment de l'épaisseur d'un panneau, les points auxquels les fils d'assemblage (2-1) traversent les fils de maille (2) sont toujours dans la même position par rapport aux points de jonction contigus et de telle manière que les électrodes de soudage (4) puissent toujours se trouver en regard d'une intersection d'un fil d'assemblage (2-1) avec un fil longitudinal (2-3) de la maille.

13. Dispositif selon l'une quelconque des revendications précédentes, dans lequel le noyau léger (1) est réalisé à partir d'un noyau en carton, le noyau en carton étant formé à partir de trois rouleaux de carton dont deux forment des surfaces de noyau supérieur et inférieure plates, et ladite machine comprend une tête contenant un système destiné à déployer et à coller les surfaces de noyau supérieure et inférieure plates sur les arêtes d'une troisième feuille continue de carton froncée sous forme crénelée, ce pliage de la couche centrale du noyau étant réalisé au moyen de molettes à onduler, l'opération de plissage se poursuivant alors progressivement à l'aide de plusieurs séries de molettes à onduler qui confèrent, de façon croissante, une plus grande hauteur aux plis du carton à mesure que celui-ci avance, les molettes servant simultanément à faire avancer le carton

14. Procédé de fabrication de panneaux composites pour la construction dans le bâtiment, les panneaux étant de sections transversales variables et de toute configuration souhaitée et comprenant une ossature métallique et un noyau léger (1), l'ossature métallique consistant en un treillis ou grillage de fils tridimensionnel se présentant de façon générale sous la forme de deux mailles parallèles (2) reliées par une série de fils d'assemblage (2-1) soudés sur celles-ci, les fils d'assemblage (2-1) étant inclinés par rapport aux fils (2-2, 2-3) des mailles (2), le noyau léger (1) consistant en une couche de résine de mousse ou de matériau d'emballage dense, de feuilles stratifiées de carton, de fibres ou de matériaux plastiques, muni de parois de renforcement et non résistant à un segment de fil le traversant, caractérisé en ce qu'il comprend les étapes consistant à :

introduire deux feuilles de maille (2) et une feuille de matériau léger (1), de façon parallèle et séparée à une distance appropriée, dans une extrémité de machine au moyen d'un dispositif d'avance et de traction intermittentes situé dans la machine et des moyens destinés à séparer les deux feuilles de mailles de fils (2) en parallèle, les deux feuilles de mailles de fils (2) étant alimentées par des moyens de distribution de mailles de fils (2), à ajuster la machine à l'aide des moyens de réglage pour permettre à la machine de prendre en compte différentes épaisseurs des deux feuilles de mailles (2) et la feuille de matériau léger (1) pour produire des panneaux composites d'épaisseurs différentes après une troisième étape de fonctionnement ;

à déplacer de façon intermittente les deux feuilles de mailles (2) et la feuille de matériau léger (1) sur une distance réglée en direction d'une première étape de fonctionnement au moyen du dispositif d'avance et de traction intermittentes ; à entraîner une série de segments de fils d'assemblage (2-1) à l'intérieur de la feuille du matériau léger (1) à la première étape opératoire, les extrémités des segments de fils (2-1) reposant contre les fils longitudinaux (2-3) des deux mailles (2) qui avancent de façon intermittente à l'intérieur de la machine, les segments de fils d'assemblage (2-1) étant entraînés par une série verticale de déchargeurs (3-1) d'un dispositif de fixation (3), un dispositif de distribution (3-2) alimentant les segments de fils d'assemblage (2-1) sur le dispositif de fixation (3), le dispositif de fixation (3) et le dispositif de distribution (3-2) étant situés au niveau de la première étape opératoire ; à déplacer l'unité ainsi constituée, avec les fils d'assemblage (2-1) en place par le dispositif d'avance et de traction intermittentes vers une seconde étape opératoire ; à souder les segments de fils d'assemblage (2-1) sur les fils longitudinaux (2-3) des deux mailles (2) à la seconde étape opératoire au moyen d'une colonne d'électrodes (4) pour former des panneaux ; à déplacer les panneaux à destination d'une troisième étape opératoire par le dispositif d'avance et de traction intermittentes ; à découper les panneaux à la dimension souhaitée au moyen d'un dispositif de scie (5) comprenant au moins une scie à lame circulaire, à ruban ou à faisceau laser ; les étapes opératoires étant commandées automatiquement.

15. Appareil destiné à la fabrication par un procédé continu de panneaux composites, les panneaux étant de section transversale variable et présentant toute configuration souhaitée et comprenant une ossature métallique et un noyau léger (1), l'ossature métallique consistant en un treillis ou grillage de fils tridimensionnel se présentant de façon générale sous la forme de deux mailles parallèles (2), reliées par une série de fils d'assemblage (2-1) soudés sur celles-ci, les fils d'assemblage (2-1) étant inclinés par rapport aux fils (2-2, 2-3) des mailles (2), le noyau léger (1) consistant en une couche de résine de mousse ou de matériau d'emballage dense, de feuilles stratifiées de carton, de fibres ou de matériaux plastiques, muni de parois de renforcement et non résistants aux segments de fils la traversant, comprenant en combinaison : un moyen d'alimentation en maille de fils (2) ; un moyen pour séparer la maille de fils (2) sur une distance appropriée et à maintenir celle-ci de façon parallèle ; une machine comprenant un dispositif de traction et d'avance intermittentes dans laquelle le dispositif de traction et d'avance intermittentes introduit deux feuilles de mailles (2) et une feuille de matériau léger (1), de façon parallèle et séparée à une distance appropriée jusque dans une extrémité de la machine ; la machine comprenant des moyens pour le réglage de celle-ci afin de prendre en compte les différentes épaisseurs des deux feuilles de mailles (2) et une feuille de matériau léger (1) pour produire des panneaux composites d'épaisseur variable à l'achèvement d'une troisième étape opératoire ; le dispositif de traction et d'avance intermittentes déplace de façon intermittente les deux feuilles de mailles (2) et une feuille de matériau léger (1) à une distance réglée jusqu'à une première étape opératoire ; un dispositif de distribution (3-2) et un dispositif de fixation (3), comprenant une série verticale de déchargeurs (3-1) et un dispositif de fixation (3), chacun étant situé au niveau de la première étape opératoire, le dispositif de distribution (3-2) alimentant une série de segments de fils d'assemblage (2-1) sur le dispositif de fixation (3), la série verticale de déchargeurs (3-1) entraîne alors les segments de fils d'assemblage (2-1) dans la feuille de matériau léger (1), les extrémités des segments de fils (2-1) reposant contre les fils longitudinaux (2-3) des deux mailles (2) qui avancent par intermittence à l'intérieur de la machine ; le dispositif de traction et d'avance intermittentes fait avancer l'unité ainsi constituée avec les fils d'assemblage (2-1) en place vers une deuxième étape opératoire ; une colonne d'électrodes (4) située au niveau de la seconde étape opératoire pour le soudage des segments des fils d'assemblage (2-1) sur les fils longitudinaux (2-3) des deux mailles (2) permet ainsi de former les panneaux ; le dispositif de traction et d'avance intermittentes fait avancer les panneaux vers la troisième étape opératoire ; un dispositif de scie (5) situé au niveau de la troisième étape opératoire, le dispositif de scie (5) comprenant au moins une scie à lame circulaire, à ruban ou à faisceau laser pour découper les panneaux à la dimension souhaitée ; et des moyens destinés à commander automatiquement les première, seconde et troisième étapes opératoires

16. Dispositif selon l'une quelconque des revendications précédentes, dans lequel les fils d'assemblage (2-1) sont réalisés en acier ordinaire et subissent un traitement de surface avant l'introduction dans la machine, les fils d'assemblage (2-1) étant soumis au dénudage par meulage d'une épaisseur d'environ 10 mm le long de chaque point pour permettre ainsi le soudage des fils sur les mailles (2).

17. Appareil selon l'une quelconque des revendications précédentes, dans lequel le dispositif de traction et d'avance intermittentes effectue tous les mouvements intermittents des deux feuilles de mailles de fils (2) et de la feuille de noyau léger (1) à travers l'ensemble des trois sections de la machine.

FIG.1.

FIG.2.

FIG.3.

FIG.4.

FIG.5.

FIG.6.

FIG.7.

FIG.8.

FIG.9.

3-8

2-1

3-1

FIG.10.

5-1

5-3

5-2

5-4

5-5

2-1

FIG.11.

FIG.12.

FIG.13.

FIG.14.

FIG.15.

FIG.16.

FIG.17.

FIG. 18.

FIG. 19.

FIG. 20.

FIG. 21.

FIG. 22.

FIG. 23.

FIG. 24.

FIG. 25.

FIG. 26.